**Europäisches Patentamt**

**European Patent Office**

**Office européen des brevets**

(19)

(11) Veröffentlichungsnummer: **0 047 499**
**B1**

(12)

# EUROPÄISCHE PATENTSCHRIFT

(45) Veröffentlichungstag der Patentschrift:
**19.02.86**

(21) Anmeldenummer: **81106909.5**

(22) Anmeldetag: **03.09.81**

(51) Int. Cl.⁴: **B 60 L 11/04**

(54) Antriebsaggregat für ein Flurförderzeug, insbesondere für einen Hublader.

(30) Priorität: **05.09.80 DE 3033541**

(43) Veröffentlichungstag der Anmeldung:
**17.03.82 Patentblatt 82/11**

(45) Bekanntmachung des Hinweises auf die Patenterteilung:
**19.02.86 Patentblatt 86/8**

(84) Benannte Vertragsstaaten:
**AT BE CH DE FR GB IT LI LU NL SE**

(56) Entgegenhaltungen:
**CH - A - 183 578**
**FR - A - 2 434 511**
**GB - A - 1 059 065**
**US - A - 3 263 142**
**US - A - 3 370 218**

**K. Sachs "Elektrische Triebfahrzeuge" Bd. 2, Seiten 578, 579, 621, 637**

(73) Patentinhaber: **STILL GMBH, Berzeliusstrasse 10, D-2000 Hamburg 74 (DE)**

(72) Erfinder: **Kröhling, Erich, Schaumannskamp 69, D-2057 Reinbek (DE)**
Erfinder: **Kremer, Manfred, Grootmoor 150, D-2000 Hamburg 71 (DE)**

(74) Vertreter: **Schaefer, Gerhard, Dr., Linde Aktiengesellschaft Zentrale Patentabteilung, D-8023 Höllriegelskreuth (DE)**

**Beschreibung**

Die Erfindung bezieht sich auf ein Antriebsaggregat für ein Fahrzeug mit einer Brennkraftmaschine, die vorzugsweise ein Dieselmotor ist, und mit einem von dieser Brennkraftmaschine angetriebenen, fremderregten Gleichstromgenerator, der einen Gleichstrommotor für den Fahrzeugantrieb speist, wobei mit der Brennkraftmaschine ein Maschinendrehzahlregler verbunden ist und mit dem Gleichstrommotor ein Motordrehzahlregler gekuppelt ist, wobei einem Leistungsregelorgan für den die Feldspule des Gleichstromgenerators durchfliessenden Strom eine Steuerschaltung zugeordnet ist, der das Signal eines mit dem Einstellorgan der Brennkraftmaschine gekuppelten Einstellorgansignalgebers, das Maschinendrehzahlsignal, ein Motorstromsignal sowie das Ausgangssignal eines Geschwindigkeitsregelorganes zugeführt sind, wobei dem Geschwindigkeitsregelorgan eingangsseitig die Differenz eines vom Fahrer vorgegebenen Fahrgeschwindigkeitssollwertes und des Motordrehzahlsignales zugeführt ist.

Es ist bereits eine Regeleinrichtung für eine dieselelektrische Lokomotive bekannt, wobei an die Welle des Dieselmotors ein fremderregter Gleichstromgenerator angekuppelt ist. An die Welle des Dieselmotors ist ferner ein zweiter Generator gekuppelt, der zum Erzeugen des Erregerstromes dient und ist weiterhin ein als Maschinen-Ist-Drehzahlsignalgeber dienender Tachogenerator gekuppelt. Der von dem mit der Welle des Dieselmotors verbundenen Gleichstromgenerator erzeugte Strom wird mehreren zueinander parallel geschalteten Gleichstrommotoren zugeführt, von denen jeder mit einem als Motor-Ist-Drehzahlsignalgeber dienenden Tachogenerator verbunden ist. Der Dieselmotor ist mit einer Einspritzpumpe versehen, deren Einstellung von einem Drehzahlgeber bestimmt wird, der seinerseits mittels eines Handhebels eingestellt wird. Die der Einspritzpumpe gegebene Einstellung wird weiterhin einem elektrischen Signalgeber zugeleitet und das von diesem ausgehende elektrische Signal wird einem Funktionsgenerator zugeleitet, dem weiterhin das Signal des an die Welle des Dieselmotors angeschlossenen Tachogenerators und ein Signal eines Signalumsetzers zugeführt werden, der die Grösse des Spüldruckes des Dieselmotors in ein elektrisches Signal umsetzt. Das von dem Funktionsgenerator ausgehende Signal wird einem Regler zugeführt, dem weiterhin ein Vergleichswertsignal zugeführt wird, welches aus einem Vergleich des Signales eines weiteren willkürlich betätigbaren Einstellhebels mit den Motor-Ist-Drehzahlsignalen zufliesst. Dem Funktionsgenerator fliesst weiterhin ein Signal für den zwischen Gleichstromgenerator und Motoren fliessenden Strom sowie ein Signal für den Erregerstrom zu, wobei der Regulator seinerseits den Erregerstrom steuert (GB-PS 1 059 065). Bei dieser Einrichtung muss also der Bedienungsmann einerseits über ein Betätigungsorgan den Dieselmotor einstellen und zweitens über ein zweites Betätigungsorgan eine die Fahrgeschwindigkeit beeinflussende Grösse wählen. Entsprechend der Anwendung bei einer diesel-elektrischen Lokomotive ist die gesamte Einrichtung ausgelegt auf die Zielsetzung, die von dem Gleichstromgenerator erzeugte elektrische Leistung optimal an die maximal von der Dieselmaschine abgebbare Leistung abhängig von der Fahrgeschwindigkeit anzupassen. Diese bekannte Einrichtung stellt mit den zwei unabhängig voneinander zu betätigenden Sollwertgebern hohe Anforderungen an die Aufmerksamkeit des Lokomotivführers, wobei allerdings bei der Lokomotive der Führer auch dadurch, dass er sich nicht auf aufgenommene Lasten und möglicherweise im Fahrweg auftauchende Gefahren zu konzentrieren braucht, sich voll auf das Steuern des Fahrantriebes konzentrieren kann. Die bekannte Einrichtung ist weiterhin relativ aufwendig, insbesondere dadurch, dass auch noch ein Drucksignal von dem Dieselmotor in einem zwischengeschalteten Funktionsgenerator umgesetzt und erst dann dem Regler zugeführt wird, der seinerseits das die Felderregung steuernde Organ beeinflusst, wobei besondere Aufmerksamkeit darauf gerichtet ist, dass das maximale Moment der Motoren derart begrenzt ist, dass ein Durchdrehen der Antriebsräder vermieden wird. Zu diesem Zweck dienen die Motor-Drehzahl-Istwert-Geber.

Für Flurförderzeuge, insbesondere Gabelstapler, ist es sehr wichtig, die Fahrgeschwindigkeit feinfühlig genau steuern zu können, wobei die tatsächliche Fahrgeschwindigkeit bei gleichgehaltener Lage des Fahrpedals gleichbleiben soll. Das gilt insbesondere für Gabelstapler, die oft sehr empfindliche Lasten transportieren müssen, beispielsweise Paletten, auf denen Glasballons mit brennbaren oder giftigen Flüssigkeiten stehen, und die auch mit hoch angehobener Last feinfühlig und genau an Regale oder dergleichen zum Absetzen der Last herangefahren werden sollen.

Der Erfindung liegt die Aufgabe zugrunde, ein Antriebsaggregat gemäss der eingangs genannten Gattung derart zu gestalten, dass bei einfacher Bedienung und damit geringen Anforderungen an den Bedienungsmann die tatsächliche Fahrgeschwindigkeit jederzeit so weitgehend wie möglich der am Fahrpedal (Geschwindigkeitssollwertgeber) vorgewählten Geschwindigkeit entspricht, wobei gleichzeitig ein Stillsetzen der Brennkraftmaschine durch grosse Überlastung verhindert wird.

Diese Aufgabe wird gemäss der Erfindung durch die Kombination folgender Merkmale gelöst:

a) das Antriebsaggregat ist für ein Flurförderzeug, insbesondere für einen Hublader vorgesehen,

b) es ist ein einziger, insbesondere als Fahrpedal ausgestalteter Fahrgeschwindigkeitssollwertgeber vorgesehen, der neben dem Fahrgeschwindigkeitssollwert für das Geschwindigkeitsregelorgan die Einstellung der Brennkraftmaschine und über deren Einstellungssignalgeber ein Signal für die Drehzahl der unbelasteten Brennkraftmaschine gibt,

c) es ist ein Vergleichsorgan vorgesehen, dem einerseits das Signal des Einstellungssignalgebers und andererseits das Maschinen-Ist-Drehzahlsignal zugeführt sind und das die Führung des Leistungsregelorganes übernimmt, wenn das Maschinen-Ist-Drehzahlsignal mehr als um ein vorgegebenes Mass von dem Signal für die Drehzahl der unbelasteten Brennkraftmaschine abweicht.

Das kennzeichnende Merkmal b) ermöglicht, mit einem einzigen, von dem Fahrer zu bedienenden Fahrgeschwindigkeitssollwertgeber sowohl ein Signal für die Maschinendrehzahl, als auch für die Fahrgeschwindigkeit als solche zu geben, wobei bei gegebener Maschinendrehzahl die Fahrgeschwindigkeit als solche durch das Verhältnis zwischen Generatordrehzahl und Elektromotordrehzahl bestimmt wird. Da die Motordrehzahl immer von der Einstellung der Maschine und von der Drehmomentbelastung abhängig ist, kann eine konkrete Drehzahlvorgabe nur für einen bestimmten Belastungszustand – hier dem Zustand bei unbelasteter Maschine – vorgegeben werden.

Das kennzeichnende Merkmal c) ermöglicht, dann, wenn durch ein zu grosses, von dem Generator aufgenommenes Drehmoment die Brennkraftmaschine überlastet würde, das vom Generator aufgenommene Drehmoment derart zu vermindern, dass ein Überlasten der Brennkraftmaschine verhindert wird.

Beide kennzeichnenden Merkmale b) und c) zusammen lösen also die gestellte Aufgabe und erzielen, dass mit nur einem Fahrgeschwindigkeitssollwertgeber jederzeit präzise die Fahrgeschwindigkeit gesteuert werden kann. Dabei ist es möglich, sowohl das Antreiben in beiden Drehrichtungen, das heisst beiden Fahrtrichtungen, zu steuern, als auch das Bremsen in beiden Drehrichtungen, das heisst Fahrtrichtungen. Durch den Einfluss des Vergleichswertes zwischen Sollwert-Signal und Istwert-Signal wird genau die angesteuerte Geschwindigkeit gefahren.

Gemäss einer zweckmässigen Weiterausgestaltung wird das Signal, das von dem den zwischen Gleichstromgenerator und Gleichstrommotor fliessenden Strom messenden Strommesser ausgeht, einem dem Gleichstrommotor zugeordneten Feldstromsteuerorgan zugeführt. Die Anwendung einer solchen Beeinflussung ist bei einem Antriebsaggregat gemäss Patentanspruch 1 besonders vorteilhaft.

In einer anderen, zweckmässigen Weiterausgestaltung ist vorgesehen, dass zwischen dem Geschwindigkeitsregelorgan und dem Leistungsregelorgan ein Stromregler angeordnet ist und dass diesem ausser dem Ausgangssignal des Geschwindigkeitsregelorganes auch das Signal des den zwischen Gleichstromgenerator und Gleichstrommotor fliessenden Strom messenden Strommessers zugeleitet wird, wobei der Stromregler bei Erreichen eines Grenzwertes des Signales des Strommessers das von dem Stromregler aus dem Leistungssignalregler zufliessende Signal begrenzt. Bei dieser Ausgestaltung dient der Stromregler zur Begrenzung des maximalen Ankerstromes im Gleichstromgenerator und im Gleichstrommotor, da in beide der gleiche Ankerstrom fliesst.

Gemäss einer anderen, zweckmässigen Weiterausgestaltung ist vorgesehen, dass der Fahrgeschwindigkeitssollwert über einen bei schnellen Änderungen dieses Signales das dem Geschwindigkeitsregelorgan zufliessende Signal nach einem vorgegebenen Programm verzögernd ändernden Integrator dem Geschwindigkeitsregelorgan zugeleitet wird. Das hat zur Folge, dass dann, wenn das Fahrpedal willkürlich sehr plötzlich durchgetreten wird, so dass eine gleichschnelle Änderung der Felderregung zu unzulässig hohen Ankerströmen führen würde, durch den Integrator das Grösserwerden oder Kleinerwerden des Signals entsprechend dem Programm des Integrators in einem vorgegebenen Mass stetig vergrössert oder verringert wird, so dass einerseits kein unzulässig hoher Strom im Gleichstromgenerator und im Gleichstrommotor erreicht wird, andererseits aber die gewünschte Änderung der Drehzahl der Gleichstrommotorabtriebswelle so bald wie möglich erreicht wird. Diese Änderungsfunktion des Integrators kann durch ein Programm gegeben und veränderbar sein. Solche Veränderbarkeit kann gewünscht sein, wenn ein und dasselbe Antriebsaggregat für verschiedene Fahrzeuge mit unterschiedlichen Eigenschaften verwendet wird. Dann kann auch vorgesehen sein, dass bei Einbau des Antriebsaggregates in das Fahrzeug das Programm des Integrators manuell willkürlich entsprechend den Fahrzeugeigenschaften eingestellt wird. Ein Verändern der Änderungsgeschwindigkeit des Signales hat aber auch eine Änderung der Fahrzeugbeschleunigung zur Folge, wobei die jeweils maximal mögliche oder optimale Fahrzeugbeschleunigung bzw. Verzögerung durch verschiedene Umstände bestimmt wird. Beispielsweise kann vorgesehen sein, dass die Änderungsfunktion des Integrators durch einen am Fahrerstand angebrachten Hebel bei rauher, fester, trokkener Fahrbahn auf einen anderen Wert eingestellt wird wie auf nasser glitschiger Fahrbahn. Weiterhin kann vorgesehen sein, dass die Änderungsfunktion des Integrators selbsttätig abhängig gemacht wird von einem Signal, das von der Achsbelastung der von dem Gleichstrommotor angetriebenen Räder abhängig ist, so dass bei grosser Achslast und somit guter Reibung zwischen Rädern und Fahrbahn eine grosse Beschleunigung ausgenutzt werden kann, während bei wenig belasteter Achse und somit grosser Gefahr des Durchdrehens der Räder die Beschleunigung und damit die Gefahr des Durchdrehens der Räder, welches unnötig hohen Reifenverschleiss zur Folge haben würde, vermindert wird. Die Möglichkeit, grundsätzlich oder im Betrieb durch den Fahrer die Änderungsfunktion des Integrators zu verstellen, kann auch dann zweckmässig sein, wenn unterschiedliche Lasten unterschiedlicher Empfindlichkeit mit dem angetriebenen Fahrzeug transportiert werden sollen, beispielsweise zeitweise Gussblöcke, auf die bedenkenlos grosse Beschleunigungen einwirken dürfen, und zeitweise relativ dünne Glasballons, die mit gefährlichen Flüssigkeiten gefüllt sind und nur geringen Beschleunigungen ausgesetzt werden dürfen.

Normalerweise ist bei einem Kraftfahrzeug die Möglichkeit vorgesehen, dass dieses vorwärts und rückwärts fahren und angetrieben werden kann. In den meisten Fällen ist das Vorhandensein dieser Möglichkeit sogar Vorschrift. Ein entsprechendes Signal muss von einem willkürlich einstellbaren Signalgeber ausgehen. Es ist möglich, dass dieses Signal vom Fahrpedaleinstellungssignalgeber gegeben wird. Zweckmässigerweise ist für die Fahrtrichtungswahl ein zusätzlicher Signalgeber vorgesehen und es ist weiterhin zweckmässig, dass das Signal ebenfalls dem Integrator zugeleitet wird und in diesem die Polarität des Ausgangssignales beeinflusst, das heisst, dass der Integrator gleichzeitig zur Bestimmung der Polarität des dem Geschwindigkeitsregelorgan zufliessenden Signales abhängig von einem weiteren Fahrtrichtungssignal ausgestaltet ist.

Gemäss einer weiteren, zweckmässigen Ausgestaltungsform ist vorgesehen, dass das Ausgangsglied des Leistungsregelorganes einem Stellglied zugeleitet wird, das an die Feldwicklung des Gleichstromgenerators angeschlossen ist und den diese durchfliessenden Strom steuert und damit die Erregung des Gleichstromgenerators steuert. In einer zweckmässigen Weiterausgestaltung hierzu ist vorgesehen, dass zwischen das Stellglied und die Generatorfeldwicklung eine Logikschaltung geschaltet ist, durch die die Transistoren einer aus einer Brückenschaltung bestehenden Endstufe je nach der erforderlichen Spannungsrichtung wahlweise angesteuert werden. Zweckmässigerweise hat das Stellglied die Funktion, dass das Eingangssignal, welches durch die Höhe einer Spannung gegeben wird, Stromimpulse, deren Spannung der zur Verfügung stehenden Speisespannung entspricht, erzeugt, wobei die Dauer der Stromimpulse oder die Dauer der Unterbrechungen zwischen den einzelnen Stromimpulsen oder beides durch das Zufliessen des Spannungssignals bestimmt wird. Das heisst, es ist zweckmässig, dass das Stellglied eine Impulssteuerung ist.

Gemäss einer zweckmässigen Weiterausgestaltung ist vorgesehen, dass die Polarität der Feldspannung von der Polarität des von dem Stromregler zu dem Leistungsregler fliessenden Signales vorgegeben wird.

Gemäss einer weiteren zweckmässigen Weiterausgestaltung ist vorgesehen, dass der Maschinendrehzahlgeber ein Impulse aussendender Geber, beispielsweise die sowieso im Fahrzeug vorhandene, von der Brennkraftmaschine angetriebene Drehstromlichtmaschine, ist oder der Maschinendrehzahlgeber kann auch ein Impulsgeber sein, der von den Zähnen eines am Schwungrad der Brennkraftmaschine angeordneten Zahnrades beeinflusst wird, so dass der Maschinendrehzahlgeber ein Organ sein kann, das oder zumindest dessen wesentliche Teile sowieso im Antriebsaggregat vorhanden sind, wobei zwischen diesem Geber und das Vergleichsorgan ein Frequenz-/Spannungsumsetzer geschaltet ist, weil die übrige Steuerung mit Spannungssignalen arbeitet, so dass die Impulse in ein Spannungssignal umgewandelt werden müssen.

Gemäss einer anderen zweckmässigen Weiterausgestaltung ist vorgesehen, dass der Fahrpedaleinstellungssignalgeber einen Differenzialfeldplattenfühler und einen Magneten aufweist. Damit ist eine sehr robuste und auch bei rauhen Betriebsbedingungen betriebssichere einfache Signalgebereinrichtung vorgesehen.

In der Zeichnung ist ein Ausführungsbeispiel im Schaltschema dargestellt.

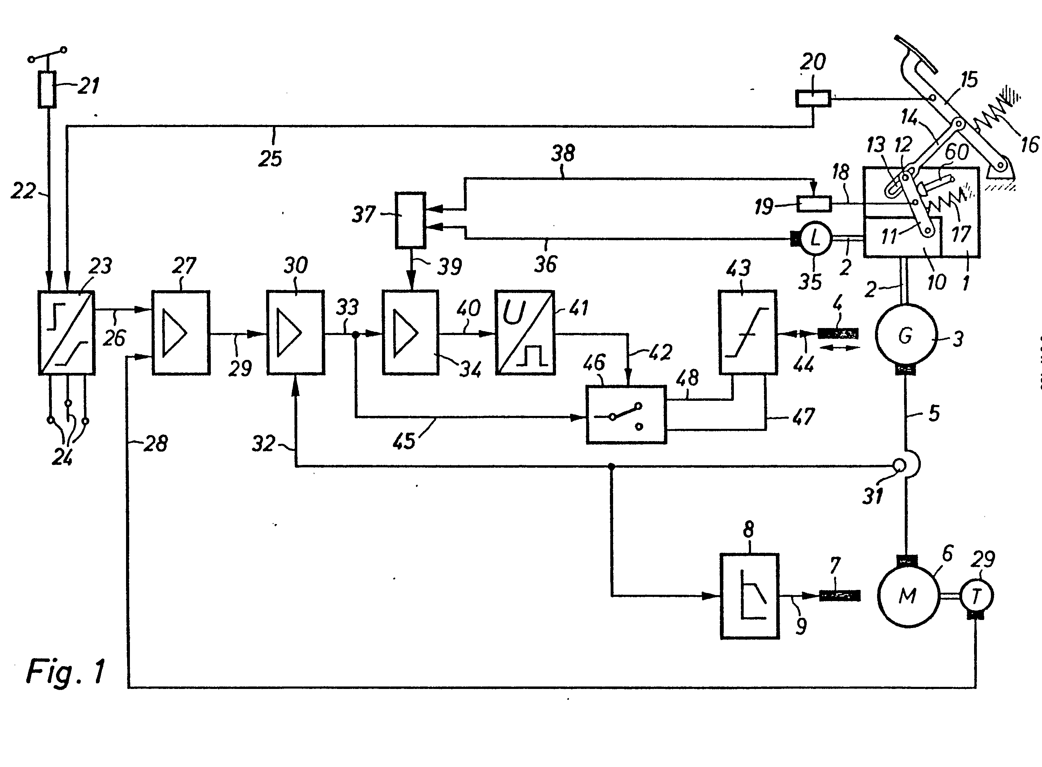

Fig. 1 zeigt das Schaltschema des Gesamtantriebsaggregates und

Fig. 2 zeigt das Schaltschema zu der Endstufe desselben.

Die Brennkraftmaschine 1 treibt über eine Welle 2 den Gleichstromgenerator 3, 4 an, wobei mit 3 der Anker und mit 4 die Feldwicklung bezeichnet ist. Der Ankerstrom des Gleichstromgenerators 3, 4 wird über Leitungen 5 zu dem Gleichstrommotor 6, 7 geführt, dessen Anker 6 an die Leitungen 5 angeschlossen ist, während der Feldwicklung 7 der Strom von einem Feldstromsteuerorgan 8 über eine Leitung 9 zufliesst.

Die Brennkraftmaschine 1 ist ein Dieselmotor, der mit einem Einstellorgan in Form einer Einspritzpumpe 10 versehen ist, das seinerseits mit einem Einstellhebel 11 versehen ist, der an seinem Ende einen Bolzen 12 aufweist, der mit Spiel in einem Langloch 13 eines Gestängehebels 14 geführt ist, der mit dem Fahrpedal 15 verbunden ist, das durch eine Feder 16 nach oben gezogen wird, während der Einstellhebel 11 durch eine Feder 17 nach oben gezogen wird.

Der Einstellhebel 11 ist über ein Gestänge 18 mit einem Einstellsignalgeber 19 in Form eines Potentiometers verbunden.

Das Fahrpedal 15 ist mit einem Fahrpedaleinstellungssignalgeber 20 verbunden.

Für die Wahl der Fahrtrichtung ist ein Fahrtrichtungsgeber 21 vorgesehen, dessen Signal über eine Leitung 22 zu einem Integrator 23 geführt ist, der über das Leitungssystem 24 an eine Spannungsquelle angeschlossen ist.

Das Signal des Fahrpedaleinstellungssignalgebers 20 wird über eine Leitung 25 ebenfalls dem Integrator 23 zugeführt, dessen Ausgangssignal über eine Leitung 26 dem Geschwindigkeitsregelorgan 27 zugeführt wird, dem andererseits über eine Leitung 28 das Signal eines als Tachogenerator ausgestalteten Motordrehzahlsignalgebers 29 zugeführt wird. In dem Geschwindigkeitsregelorgan 27 werden die durch die Leitungen 26 und 28 diesem Organ zufliessenden Signale verglichen und ausgewertet zu einem Ausgangssignal, welches über eine Leitung 29 dem Stromregler 30 zugeführt wird.

An den Leitungen 5 ist weiterhin ein Strommesser 31 angeordnet, dessen Ausgangssignal über eine Leitung 32 ebenfalls dem Stromregler 30 zugeführt wird. Dessen Ausgangssignal fliesst wiederum über eine Leitung 33 zu einem Leistungsregelorgan 34.

An die Welle 2 der Brennkraftmaschine ist weiterhin ein Maschinendrehzahlsignalgeber 35 angeschlossen, von dem ein Signal über die Leitung 36 zu dem Vergleichsorgan 37 geführt wird. Diesem Vergleichsorgan 37 fliesst weiterhin über die Leitung 38 auch das Signal des Einstellorgansignalgebers 19 zu. In dem Vergleichorgan 37 werden die Signale der Geber 19 und 35 miteinander verglichen und ausgewertet. Das Ausgangssignal des Vergleichsorganes 37 fliesst durch die Leitung 39 ebenfalls dem Leistungsregelorgan 34 zu. Dessen Ausgangssignal fliesst durch die Leitung 40 zu dem Stellglied 41, das über die Leitung 42 und den Schalter 46 und die Endstufe 43 und die Leitung 44 an die Feldwicklung 4 des Gleichstromgenerators 3, 4 angeschlossen ist.

Von der Leitung 33 zwischen dem Stromregler 30 und dem Leistungsregelorgan 34 zweigt eine Zweigleitung 45 ab, die zu einem Schalter 46 führt, der abhängig von der Polarität des in der Leitung 33 und damit in der Leitung 45 anstehenden Signales über die Leitungen 47 und 48 die Endstufe 43 beaufschlagt.

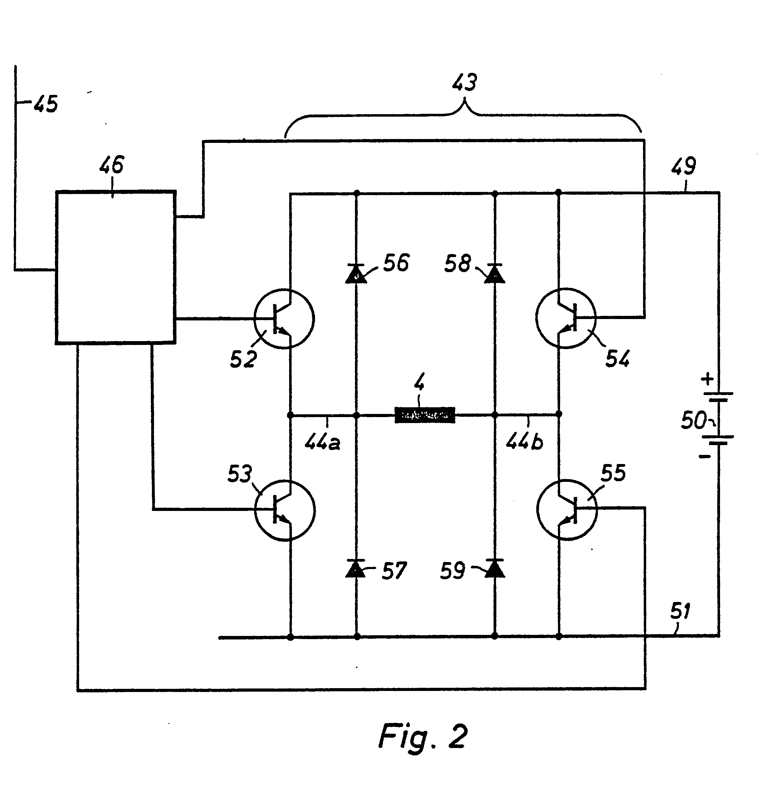

Die Endstufe 43 ist gemäss Fig. 2 über die Leitungen 49 und 51 an die Batterie 50 angeschlossen, an die auch das Feldstromsteuerorgan 8 angeschlossen ist. In der Endstufe 43 sind vier Leistungstransistoren 52, 53, 54, 55 und vier Dioden 56, 57, 58, 59 in der in Fig. 2 dargestellten Weise zusammengeschaltet derart, dass je nach Schaltzustand des Schalters 46 entweder der Strom vom positiven Pol der Batterie 50 über die Leitung 49, den Transistor 52, die Leitung 44a durch die Feldwicklung 4 und die Leitung 44b und den Transistor 55 zur Leitung 51 und durch diese zur Batterie 50 zurückfliesst oder im anderen Schaltzustand der Strom vom positiven Pol der Batterie 50 über die Leitung 49, den Transistor 54, die Leitung 44b, die Feldwicklung 4, die Leitung 44a, den Transistor 53, die Leitung 51 zum negativen Pol der Batterie 50 zurückfliesst. Das heisst, je nach dem Schaltzustand des Schalters 46 wird die Feldwicklung 4 in der einen oder in der anderen Richtung durchflossen, so dass das Feld in der einen Richtung oder anderen Richtung polarisiert wird und damit die Stromrichtung (und damit auch die Fahrtrichtung) bestimmt wird.

Der Strommesser (Strommessglied) 31 liefert den Stromistwert in Form einer Gleichspannung. Zu diesem Zweck kann der Strommesser 31 ein Differenzialfeldplattenfühler sein. Der Schleifer des Potentiometers 19 wird proportional dem Verstellwinkel des Hebels 11 verschwenkt und liefert ein zu dessen Einstellage proportionales Gleichspannungssignal. Die Grösse dieses Gleichspannungssignales ist ein Mass für die Drehzahl der Brennkraftmaschine 1 in unbelastetem Zustand. Die von der Brennkraftmaschine 1 angetriebene Lichtmaschine 35 liefert eine der Drehzahl der Brennkraftmaschine 1 proportionale Frequenz, die über einen Frequenzspannungsumsetzer in eine Spannung umgesetzt wird. Diese Spannung ist ein Signal für den Istwert der Drehzahl der Brennkraftmaschine 1. Das Fahrpedal 15 ist über ein Gestänge 14, 11 mit dem Einstellorgan der Brennkraftmaschine 1 verbunden. An einem am Fahrzeugrahmen festen Bauteil ist ein Feldplattenfühler 20 befestigt, der über einen am Fahrpedal 15 befestigten Magneten angesteuert wird und eine der Einstellage des Fahrpedales 15 entsprechende Spannung abgibt, die den Fahrgeschwindigkeitssollwert ergibt.

Wird über eine Stossstange 60, beispielsweise bei einem Hublader bei Betätigen der Steuerorgane für die Hubeinrichtung, der Einstellhebel 11 nach in der Zeichnung links verschwenkt, so wird damit das Einstellorgan 10 der Brennkraftmaschine 1 auf grössere Leistungsabgabe eingestellt und entsprechend an dem Einstellorgansignalgeber 10 ein Signal gegeben.

Der von dem Gleichstrommotor 6, 7 angetriebene Motordrehzahlsignalgeber 29 ist als Tachometermaschine ausgestaltet und liefert den Istwert der Fahrgeschwindigkeit und zwar ebenfalls in Form einer Gleichspannung.

Soll- und Istwert für die Drehzahl des Gleichstrommotors 6, 7 werden in dem Geschwindigkeitsregelorgan 27 miteinander verglichen.

Die Funktion des Leitungsregelorganes 34 ist folgende:

Der Einstellsignalgeber 19 liefert, wie bereits erwähnt, eine Spannung als Mass für die Drehzahl der unbelasteten Brennkraftmaschine 1, das heisst der Drehzahl, die die Brennkraftmaschine 1 erreicht, wenn an ihrer Welle 2 kein Drehmoment abgenommen wird, wobei die absolute Höhe der Drehzahl durch die Einstellage des Einstellhebels 11 zwischen Mindestdrehzahl bei Leerlauf bis Maximaldrehzahl bestimmt wird. Dieses in Form einer Spannung ausgedrückte Signal des Signalgebers 19 wird mit dem durch die tatsächliche Drehzahl der Brennkraftmaschine 1 bestimmten Signal des Maschinendrehzahlsignalgebers 35 in dem Vergleichsorgan 37 verglichen, dessen Ausgangsspannung ein Mass für die Drückung der Drehzahl der Brennkraftmaschine 1 infolge der Belastung ist. Dieses Ausgangssignal des Vergleichsorganes 37 wird durch die Leitung 39 dem Leistungsregelorgan 34 zugeführt.

Wie bereits erwähnt, dient das Stellglied 41 zur Umwandlung der Ausgangsspannung des Leistungsreglers in ein Rechtecksignal mit veränderlicher Einschaltdauer zwischen null und hundert Prozent und besteht die Endstufe 43 aus der beschriebenen Brückenschaltung. Der Schalter 46 schaltet in Abhängigkeit von der Ausgangspolarität des Stromreglers die jeweils benötigte Brückenhälfte 52, 55 oder 54, 53.

Der Erregerstrom in der Feldwicklung 7 des Motors 6, 7 wird durch das Feldstromsteuerorgan 8 abhängig von der Grösse des durch die Leitungen 5 fliessenden Ankerstromes zwischen fünfzig Prozent und hundert Prozent des Maximalstromes gesteuert. Dabei kann das Feldstromsteuerorgan 8 ähnlich wie das Stellglied 41 entsprechend einer Impulssteuerung aufgebaut sein und die Impulse zwischen fünfzig Prozent und hundert Prozent Einschaltdauer steuern und zwar unabhängig von der Polarität des in der Leitung 33 anstehenden Signals und damit von der Polarität der Erregung der Feldwicklung 4. Vorteile dieser Steuerungsart sind geringe Erwärmung des Motorfeldes sowie ein erweiterter Geschwindigkeitsbereich der Anlage bei Teillast und Leerfahrt.

In anderer Ausgestaltungsform ist es auch möglich, das Steuerorgan für den die Feldwicklung 7 durchfliessenden Strom zusätzlich oder alleine von anderen bzw. weiteren Signales abhängig zu machen, beispielsweise von dem Signal des Motordrehzahlgebers 29.

Der Regelvorgang beim Beschleunigen ist folgender:

Nach Wahl der Fahrtrichtung mittels des Fahrtrichtungsgebers 21 und Betätigen des Fahrpedales 15 wird ein Geschwindigkeitssollwert von dem Signalgeber 20 über die Leitung 25 und den Integrator 23 auf das Geschwindigkeitsregelorgan 27 gegeben, das infolge einer hohen Verstärkung (beispielsweise fünfhundertfacher Verstärkung) voll aufsteuert. Ebenso werden der Stromregler 30 und das Leistungsregelorgan 34 aufgesteuert, so dass der Generator 3, 4 über die Endstufe 43 erregt wird mit der Folge, dass im Anker 3 ein Ankerstrom zu fliessen beginnt. Die Grösse dieses Ankerstromes wird durch den Strommesser 31 gemessen, dessen Signal auf den Stromregler 30 zurückgeführt wird. Ist der als Maximalwert vorgesehene Wert des Ankerstromes erreicht, so regelt der Stromregler 30 die Aussteuerung der Endstufe 43 auf den zulässigen Wert zurück.

Sinkt infolge zu hoher Belastung der Brennkraftmaschine 1 deren Drehzahl, übernimmt das Leistungsregelorgan 34 aufgrund des ihm von dem Vergleichsorgan 37 zugeführten Signals die Führung des die Feldwicklung 4 durchfliessenden Stromes und regelt derart, dass die Brennkraftmaschine 1 nicht überlastet werden kann.

Nach Erreichen der durch die Stellung des Fahrpedales 15 vorgegebenen Fahrgeschwindigkeit übernimmt der Geschwindigkeitsregler 27 die Führung und hält die gewünschte Drehzahl der Abtriebswelle des Motors 6, 7, das heisst die gewünschte Geschwindigkeit.

Wird das Pedal 15 in eine einer kleineren Sollfahrgeschwindigkeit entsprechende Lage zurückgenommen, kehrt sich die Aussteuerung des Geschwindigkeitsregelorganes 27 um, da jetzt der von dem Motordrehzahlsignalgeber 29 gegebene Istsignalwert grösser als der von dem Geber 20 gegebene Sollsignalwert ist. Damit wird das Stromregelorgan 30 mit einem umgekehrten Stromsollwert beaufschlagt, der seinerseits ein entsprechendes Signal gibt, das schliesslich infolge der entsprechenden Steuerung der Erregung durch die Feldwicklung 4 die Folge hat, dass sich auch der Ankerstrom in den Ankern 3 des Generators und 6 des Motors umkehrt. Das hat die Folge, dass der Antrieb bremst, wobei das Bremsmoment auf der Brennkraftmaschine 1 abgestützt wird, wobei im Bremszustand der Motor 6, 7 als Generator wirkt und der Generator 3, 4 als Motor wirkt.

## Patentansprüche

1. Antriebsaggregat für ein Fahrzeug mit einer Brennkraftmaschine (1), vorzugsweise einem Dieselmotor, und mit einem von dieser Brennkraftmaschine angetriebenen fremderregten Gleichstromgenerator (3), der einen Gleichstrommotor (6) für den Fahrzeugantrieb speist; mit der Brennkraftmaschine (1) ist ein Maschinendrehzahlgeber (35), und mit dem Gleichstrommotor (6) ist ein Motordrehzahlgeber (29) gekuppelt; einem Leistungsregelorgan (34) für den die Feldspule (4) des Gleichstromgenerators (3) durchfliessenden Strom ist eine Steuerschaltung zugeordnet, der das Signal eines mit dem Einstellorgan (10) der Brennkraftmaschine (1) gekuppelten Einstellorgansignalgebers (19), das Maschinendrehzahlsignal, ein Motorstromsignal sowie das Ausgangssignal eines Geschwindigkeitsregelorgans (27) zugeführt sind, wobei dem Geschwindigkeitsregelorgan eingangsseitig die Differenz eines vom Fahrer vorgegebenen Fahrgeschwindigkeitssollwertes und des Motordrehzahlsignales zugeführt ist, gekennzeichnet durch die folgenden Merkmale:

a) das Antriebsaggregat ist für ein Flurförderzeug, insbesondere für einen Hublader vorgesehen,

b) es ist ein einziger, insbesondere als Fahrpedal (15) ausgestalteter Fahrgeschwindigkeitssollwertgeber vorgesehen, der neben dem Fahrgeschwindigkeitssollwert für das Geschwindigkeitsregelorgan (27) die Einstellung der Brennkraftmaschine (1) und über deren Einstellungssignalgeber (19) ein Signal für die Drehzahl der unbelasteten Brennkraftmaschine gibt,

c) es ist ein Vergleichsorgan (37) vorgesehen, dem einerseits das Signal des Einstellungssignalgebers (19) und andererseits das Maschinen-Istdrehzahlsignal zugeführt sind und das die Führung des Leistungsregelorganes (34) übernimmt, wenn das Maschinen-Istdrehzahlsignal mehr als um ein vorgegebenes Mass von dem Signal für die Drehzahl der unbelasteten Brennkraftmaschine abweicht.

2. Antriebsaggregat nach Anspruch 1, dadurch gekennzeichnet, dass das Signal, das von dem den zwischen Gleichstromgenerator (3, 4) und Gleichstrommotor (6, 7) fliessenden Strom messenden Strommesser (31) ausgeht, einem dem Gleichstrommotor (6, 7) zugeordneten Feldstromsteuerorgan (8) zugeführt wird.

3. Antriebsaggregat nach Anspruch 1, dadurch gekennzeichnet, dass zwischen dem Geschwindigkeitsregelorgan (27) und dem Leistungsregelorgan (34) ein Stromregler (30) angeordnet ist und dass diesem ausser dem Ausgangssignal des Geschwindigkeitsregelorganes (27) auch das Signal des Strommessers (31) zugeleitet wird, wobei der Stromregler (30) bei Erreichen eines Grenzwertes des Signales des Strommessers (31) das von dem Stromregler (30) aus dem Leistungssignalregler (34) zufliessende Signal begrenzt.

4. Antriebsaggregat nach Anspruch 1, dadurch gekennzeichnet, dass der Fahrgeschwindigkeitssollwert über einen bei schnellen Änderungen dieses Signales das dem Geschwindigkeitsregelorgan (27) zufliessende Signal nach einem vorgegebenen Programm verzögernd ändernden Integrator (23) dem Geschwindigkeitsregelorgan (27) zugeleitet wird.

5. Antriebsaggregat nach Anspruch 4, dadurch gekennzeichnet, dass der Integrator (23) gleichzeitig zur Bestimmung der Polarität des dem Geschwindigkeitsregelorgan (27) zufliessenden Signales abhängig von einem weiteren Fahrtrichtungssignal ausgestaltet ist.

6. Antriebsaggregat nach Anspruch 4, dadurch gekennzeichnet, dass das Programm des Integrators (23) einstellbar ist.

7. Antriebsaggregat nach Anspruch 1, dadurch gekennzeichnet, dass das Ausgangssignal des Leistungsregelorganes (34) einem Stellglied (41) zugeleitet wird, das an die Feldwicklung (4) des Gleichstromgenerators (3, 4) angeschlossen ist.

8. Antriebsaggregat nach Anspruch 7, dadurch gekennzeichnet, dass zwischen das Stellglied (41) und die Generatorfeldwicklung (4) eine Logikschaltung (43) geschaltet ist, durch die die Transistoren (53 und 54 oder 52 und 55) einer aus einer Brückenschaltung bestehenden Endstufe (43) je nach der erforderlichen Spannungsrichtung wahlweise angesteuert werden.

9. Antriebsaggregat nach Anspruch 7, dadurch gekennzeichnet, dass die Polarität der Feldspannung von der Polarität des von dem Stromregler (30) zu dem Leistungsregler (34) fliessenden Signales vorgegeben wird.

10. Antriebsaggregat nach Anspruch 1, dadurch gekennzeichnet, dass der Maschinendrehzahlgeber (35) ein Impulse aussendender Geber ist und dass zwischen diesen Geber und das Vergleichsorgan (37) ein Frequenz/Spannungsumsetzer geschaltet ist.

11. Antriebsaggregat nach Anspruch 5, dadurch gekennzeichnet, dass der Fahrpedaleinstellungssignalgeber (20) einen Differenzialfeldplattenfühler und einen Magneten aufweist.

## Claims

1. A drive unit for a vehicle having an internal combustion engine (1), preferably a diesel engine, and a separately energised d.c. generator (3) which is operated by said internal combustion engine and which feeds a d.c. motor (6) for the vehicle drive; an engine revolution indicator (35) is coupled to the internal combustion engine (1) and a motor revolution indicator (29) to the d.c. motor (6); a power regulating member (34) for the current which flows through the field winding (4) of the d.c. generator (3) is allotted a control circuit to which the signal from a signal generator (19) for the adjusting member which is coupled to the adjusting member (10) of the internal combustion engine (1), the engine revolution signal, a motor current signal and the output signal of a speed regulating member (27) are supplied, where at the input end the difference of a theoretical value of the speed of travel predetermined by the driver and the signal for the rate of revolution of the motor are supplied to the speed regulating member, characterised by the following features:

a) the drive unit is provided for an industrial truck, in particular for a lift truck,

b) there is arranged a single indicator for the theoretical value of the speed of travel, which in particular is in the form of a driving pedal (15) and which in addition to the theoretical value of the speed of travel for the speed regulating member (27) determines the adjustment of the internal combustion engine (1) and by means of the adjusting signal generator (19) thereof emits a signal for the rate of revolution of the internal combustion engine at no load,

c) a comparison member (37) is provided to which, on the one hand, the signal from the generator (19) for the adjusting signal and, on the other hand, the signal for the actual rate of revolution of the engine, are supplied, and which takes charge of the guidance of the power regulating member (34) if the signal of the actual rate of revolution of the engine differs from the signal for the rate of revolution of the internal combustion engine at no load by more than a predetermined amount.

2. A drive unit as claimed in Claim 1, characterised in that the signal which emanates from the ammeter (31) measuring the current which flows between the d.c. generator (3, 4) and the d.c. motor (6, 7), is supplied to a field current control member (8) assigned to the d.c. motor (6, 7).

3. A drive unit as claimed in Claim 1, characterised in that a current regulator (30) is arranged between the regulating member (27) and the power regulating member (34); and that, in addition to the output signal of the speed regulating member (27), the signal from the ammeter (31) is supplied to the current regulator, where, when a limiting value of the signal from the ammeter (31) is reached, the current regulator (30) limits the signal emanating from the current regulator (30) to the power signal regulator (34).

4. A drive unit as claimed in Claim 1, characterised in that the theoretical value of the speed of travel is fed to the speed regulating member (27) through an integrator (23) which in the event of rapid changes of this signal, changes the signal which flows to the speed regulating element (27) in a delayed manner in accordance with a predetermined programme.

5. A drive unit a claimed in Claim 4, characterised in that the integrator (23) is simultaneously designed for determining the polarity of the signal which flows to the speed regulating element (27) in dependence upon a further signal for the direction of travel.

6. A drive unit as claimed in Claim 4, characterised in that the programme of the integrator (23) is adjustable.

7. A drive unit as claimed in Claim 1, characterised in that the output signal of the power regulating member (34) is supplied to an adjusting member (41) which is connected to the field winding (4) of the d.c. generator (3, 4).

8. A drive unit as claimed in Claim 7, characterised in that a logic circuit (43) is inserted between the adjusting member (41) and the generator field winding (4) by means of which logic circuit, the transistors (53 and 54 or 52 and 55) of an end stage (43) consisting of a bridge circuit are alternatively triggered in dependence upon the required voltage direction.

9. A drive unit as claimed in Claim 7, characterised in that the polarity of the field voltage is predetermined by the polarity of the signal flowing from the current regulator (30) to the power regulator (34).

10. A drive unit as claimed in Claim 1, characterised in that the generator (35) for the rate of revolution of the engine is a generator which transmits pulses; and that a frequency/voltage transformer is inserted between said generator and the comparison member (37).

11. A drive unit as claimed in Claim 5, characterised in that the signal generator (20) for the driving pedal adjustment has a differential field plate sensor and a magnet.


**Revendications**

1. Groupe d'entraînement pour un véhicule comportant un moteur à combustion interne (1), qui est de préférence un moteur diésel, ainsi qu'un générateur de courant continu (3) excité de l'extérieur, entraîné par ce moteur à combustion interne et qui alimente un moteur à courant continu (6) pour l'entraînement du véhicule, le moteur à combustion interne (1) étant relié à un transmetteur de vitesse de rotation de moteur thermique (35) tandis que le moteur à courant continu (6) est accouplé à un transmetteur de vitesse de rotation de moteur (29), un organe de régulation de puissance (34) pour le courant passant dans l'enroulement de champ (4) du générateur de courant continu (3) étant associé à un circuit de commande qui reçoit le signal d'un transmetteur de signaux d'organe de régulation (19) accouplé à l'organe de régulation (10) du moteur à combustion interne (1), le signal de vitesse de rotation de moteur thermique, un signal de courant de moteur ainsi que le signal de sortie d'un organe de régulation de vitesse (27), auquel est appliquée du côté d'entrée la différence entre une valeur de consigne de vitesse de marche prédéterminée par le conducteur et le signal de vitesse de rotation de moteur, caractérisé par les particularités suivantes:

a) le groupe d'entraînement est prévu pour un chariot de manutention, notamment un chariot élévateur,

b) il est prévu un seul transmetteur de valeur de consigne de vitesse de marche agencé notamment sous forme d'une pédale d'accélération (15), qui assure, en dehors de la fourniture de la valeur de consigne de vitesse de marche pour l'organe de régulation de vitesse de marche (27), le réglage du moteur à combustion interne (1) et qui fournit par l'intermédiaire de son transmetteur de signal de régulation (19) un signal correspondant à la vitesse de rotation du moteur à combustion interne non chargé,

c) il est prévu un organe de comparaison (37), qui reçoit d'une part le signal provenant du transmetteur de signal de régulation (19) et, d'autre part, le signal de vitesse réelle de rotation de moteur thermique et qui assure le guidage de l'organe de régulation de puissance (34) quand le signal de vitesse réelle de rotation de moteur thermique s'écarte de plus d'une valeur prédéterminée du signal représentant la vitesse de rotation du moteur à combustion interne non chargé.

2. Groupe d'entraînement selon la revendication 1, caractérisé en ce que le signal qui est fourni par l'appareil de mesure de courant (31) assurant la mesure du courant passant entre le générateur de courant continu (3, 4) et le moteur à courant continu (6, 7), est appliqué à un organe de commande du courant de champ (8) associé au moteur à courant continu (6, 7).

3. Groupe d'entraînement selon la revendication 1, caractérisé en ce qu'il est prévu entre l'organe de régulation de vitesse de marche (27) et l'organe de régulation de puissance (34), un régulateur de courant (30) et en ce que celui-ci reçoit, en dehors du signal de sortie de l'organe de régulation de vitesse de marche (27), également le signal de l'appareil de mesure de courant (31), ce régulateur de courant (30) limitant, lorsqu'une valeur limite du signal de l'appareil de mesure de courant (31) est atteinte, le signal qui est transmis du régulateur de signal de puissance (34) au régulateur de courant (30).

4. Groupe d'entraînement selon la revendication 1, caractérisé en ce que la valeur de consigne de vitesse de marche est appliquée à l'organe de régulation de vitesse de marche (27) par l'intermédiaire d'un intégrateur (23), modifiant de façon retardée, selon un programme prédéterminé et lors de variations rapides dudit signal, le signal transmis à l'organe de régulation de vitesse de marche (27).

5. Groupe d'entraînement selon la revendication 4, caractérisé en ce que l'intégrateur (23) est agencé de manière à déterminer simultanément la polarité du signal appliqué à l'organe de régulation de vitesse de marche (27) en fonction d'un autre signal de sens de marche.

6. Groupe d'entraînement selon la revendication 4, caractérisé en ce que le programme de l'intégrateur (23) est réglable.

7. Groupe d'entraînement selon la revendication 1, caractérisé en ce que le signal de sortie de l'organe de régulation de puissance (34) est appliqué à un organe de manœuvre (41) qui est relié à l'enroulement de champ (4) du générateur de courant continu (3, 4).

8. Groupe d'entraînement selon la revendication 7, caractérisé en ce qu'il est prévu, entre l'organe de manœuvre (41) et l'enroulement de champ (4) du générateur, un circuit logique (43) par l'intermédiaire duquel les transistors (53 et 54 ou 52 et 55) d'un étage final (43) se composant d'un circuit à pont sont excités sélectivement en fonction du sens de la tension requise.

9. Groupe d'entraînement selon la revendication 7, caractérisé en ce que la polarité de la tension de champ est prédéterminée par la polarité du signal transmis du régulateur de courant (30) au régulateur de puissance (34).

10. Groupe d'entraînement selon la revendication 1, caractérisé en ce que le transmetteur de vitesse de rotation de moteur thermique (35) est un émetteur d'impulsions et en ce qu'il est prévu un convertisseur fréquence-tension entre ce transmetteur et l'organe de comparaison (37).

11. Groupe d'entraînement selon la revendication 5, caractérisé en ce que le transmetteur de signal de position de pédale d'accélérateur (20) comporte un capteur de champ différentiel à plaques et un aimant.

Fig. 1

0 047 499

Fig. 2